**Europäisches Patentamt**

**European Patent Office**

**Office européen des brevets**

(11) Veröffentlichungsnummer: **0 152 870**
A2

## EUROPÄISCHE PATENTANMELDUNG

(21) Anmeldenummer: 85101270.8

(22) Anmeldetag: 07.02.85

(51) Int. Cl.⁴: **F 02 D 33/02,** F 02 B 37/00, F 01 N 3/02

(30) Priorität: 21.02.84 CH 823/84

(43) Veröffentlichungstag der Anmeldung: **28.08.85** **Patentblatt 85/35**

(84) Benannte Vertragsstaaten: **CH DE FR GB IT LI**

(71) Anmelder: **BBC Aktiengesellschaft Brown, Boveri & Cie., Haselstrasse, CH-5401 Baden (CH)**

(72) Erfinder: **Mayer, Andreas, Forhölzlistr. 14b, CH-5443 Niederrohrdorf (DE)**

(54) Verfahren zur Regenerierung des Abgaspartikelfilters bei Verbrennungsmotoren.

(57) Durch eine der Steuerung der Drosselklappe (4) überlagerte Regelung werden die Elemente (5, 4, 3, 6, 12, 13) einer Verbrennungsmotorschaltung synchron geregelt, dergestalt, dass dadurch ein kontinuierliches Regenerieren des Abgaspartikelfilters (3) gewährleistet wird.

M 07·02·55

0152870

17/84

21.2.1984
Bo/eh

- 1 -

## Verfahren zur Regenerierung des
## Abgaspartikelfilters bei Verbrennungsmotoren

Die Erfindung betrifft ein Verfahren zum Regenerieren des
Abgaspartikelfilters gemäss Oberbegriff des Anspruchs.

Der Grad der Partikelemission von Verbrennungsmotoren
ist bereits in einigen Ländern gesetzlich limitiert;
andere Länder werden folgen, wobei allgemein zu erwarten
ist, dass die zulässigen Grenzwerte von Abgaspartikeln
eine Verschärfung erfahren werden.
Bei der Partikelemission von Verbrennungsmotoren handelt
es sich im wesentlichen um folgende Bestandteile:

- Freischwebender Russ
- Im Russ angelagerte Kohlenwasserstoffverbindungen
  und andere organische Substanzen
- Sulfatverbindungen
- Bleiverbindungen, nämlich bei Ottomotoren

Eine vollständige Eliminierung der Partikelemission
bei Verbrennungsmotoren durch Massnahmen innerhalb des
Verbrennungsprozesses ist bis heute noch nicht gelungen,

0152870

jedoch wurden bereits Fortschritte in der Reduzierung
der Partikelemission durch Vorkehrungen bei den Abgasen
erzielt.

Aus EP-A-0072059 ist bekannt, im Hochdruckteil des Abgassystems vor der Druckwellenmaschine einen Abgaspartikelfilter anzuordnen. Tritt nun bei Teillast eine Verstopfung des Abgaspartikelfilters auf, dann bewirkt
dessen Druckverlust primär eine Behinderung des Gaswechsels des Motors, was eine Reduktion der Nutzleistung
zur Folge hat. Die Leistungseinbusse wird vom Fahrzeuglenker durch eine grössere Brennstoffzuführung wettgemacht. Fordert der Fahrzeuglenker dem Fahrzeug genügend
Leistung ab, so steigt die Abgastemperatur stark an
und es kommt automatisch zu einem Abbrennen der im Filter
abgelagerten Abgaspartikeln. Der bei dieser Schaltung
zugrundegelegte Temperaturstoss kann auch durch eine
kurzfristige Betätigung der Ladeluftklappe, des Abgasbypassventils oder der Rezirkulationsklappe erzielt
werden. Beim Schliessen der Ladeluft- oder Rezirkulationsklappe resp. Oeffnen des Abgasbypassventils wird
kurzfristig die Ladeluftdichte und somit der Luftüberschuss verringert, was bei gleichbleibender Brennstoffzuführmenge die Abgastemperatur erhöht.

Dieses sporadische Regenerieren des Abgaspartikelfilters
führt aber zwangsläufig zu einer stetig anwachsenden
Verstopfung des Filters und deshalb zu schlechtem thermodynamischem Verhalten des Motors. Das sporadische Regenerieren des Abgaspartikelfilters ist an sich ein zufälliges, unkontrolliertes Abbrennen der Ablagerungen und
führt wegen der hohen Temperaturgradienten und Wärmespannungen zu einer Ermüdung des Materials und zur Zerstörung
des Filters. Darüber hinaus muss angenommen werden,
dass der Widerstand und die grosse thermische Trägheit
des Abgaspartikelfilters den Brennstoffverbrauch und die Fahrleistung verschlechtern, vor allem im transienten Verhalten.

Hier will die Erfindung Abhilfe schaffen. Der Erfindung, wie sie in den Ansprüchen gekennzeichnet ist, liegt die Aufgabe zugrunde, das Regenerieren des Abgaspartikelfilters kontinuierlich zu gestalten.

Der Vorteil der Erfindung ist im wesentlichen darin zu sehen, dass durch das ständige Abbrennen der filtrierten Abgaspartikeln nicht nur der Russausstoss, sondern auch die HC-Emission minimiert werden sowie gleichzeitig durch den Einsatz der Abgas-Rezirkulation, als Mittel zur Erhöhung der Regenerationswahrscheinlichkeit, die $NO_x$-Bildung vermindert wird. Das stetige Abbrennen gewährleistet des weiteren ein gleichmässiges Betriebsverhalten des Filters, dessen Widerstand bleibt klein und konstant, wodurch die Fahrleistung (Ansprechverhalten) des Fahrzeuges keine Einbusse erleidet.

Dazu muss die Abgastemperatur im gesamten Teillastbereich gesteigert werden: Die Entzündung der filtrierten Abgaspartikeln setzt bei einer Temperatur von 500 - 550 °C ein, sofern eine Sauerstoffkonzentration von 3 % - 6 % zur Verfügung steht.
Der Abgaspartikelfilter ist eine Wärmesenke, die das Ansprechverhalten des nachgeschalteten Aufladeaggregates verschlechtert. Durch Erhöhung der Abgastemperatur im Teillastbereich wird der Abgaspartikelfilter soweit aufgeheizt, dass beim Uebergang auf Vollast dem Abgas nur noch wenig Wärme entzogen wird. Gleichzeitig muss die rezikulierte Abgasmenge so gross und im Kennfeld so verteilt sein, dass im Zertifikationszyklus die gesetzlichen Limiten bezüglich $NO_x$-Emission erfüllt werden. Durch diese Massnahme soll einerseits der Brennstoffverbrauch des Motors nicht zunehmen und andererseits die Partikelproduktionsrate nicht wesentlich über den Durchschnittswert hinaus ansteigen. Das Schaltkonzept der gesteuerten Elemente, nämlich Aufladeaggregat, Drosselklappe, Abgaspartikelfilter, Ladeluftkühlung etc., basiert auf einer Hintereinanderschaltung von Steuer- und Regelvorgängen.

Finden schnelle Aenderungen der Last oder Drehzahl des Motors statt, so geht die Drosselklappe schnell in neutrale (offene) Position oder bleibt dort eingesteuert. Ist die schnelle Positionsänderung abgeschlossen, so wird die Drosselklappe in die für das gesamte Kennfeld gespeicherte Winkelposition gesteuert und dies in Abhängigkeit von Drehzahl und Last. Dies bedeutet, dass erst aus der gesteuerten Position der Drosselklappe heraus eine Regelung derselben stattfindet, wobei die durch die synchron zueinander geschalteten Elemente zu regelnden Grössen z.B. die Ladeluft-,Abgastemperatur und/oder Sauerstoffkonzentration des Abgases sind.

In der Zeichnung sind Ausführungsbeispiele der Erfindung schematisch dargestellt.

Es zeigt:

Fig. 1   eine Schaltung eines Motors mit einem Druckwellenlader und

Fig. 2   eine Schaltung eines Motors mit einem Turbolader.

Alle für das unmittelbare Verständnis der Erfindung nicht erforderlichen Elemente sind fortgelassen. Die Strömungsrichtung des Arbeitsmediums ist mit Pfeilen bezeichnet. In den Figuren sind gleiche Elemente mit gleichen Bezugszeichen versehen.

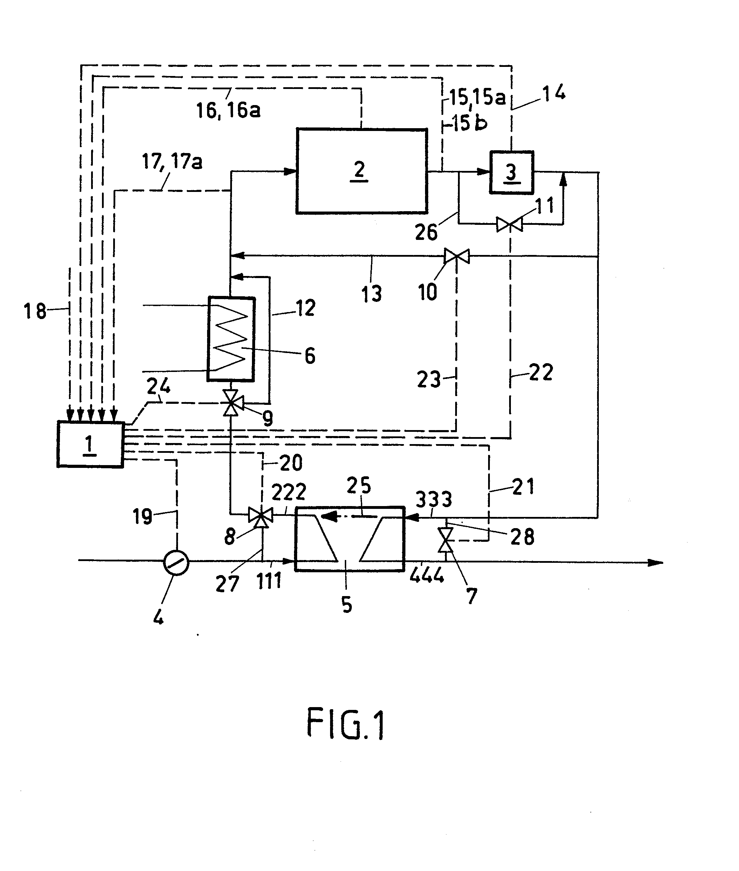

In Fig. 1 ist eine Schaltung mit einem Druckwellenlader
5 dargestellt.
Die Steuereinheit 1 erhält ständig die folgenden Eingangssignale:
- Motordrehzahl 16 und Motordrehmoment 16a
- Ladedruck 17 und Ladelufttemperatur 17a
- Abgasdruck 15 und Abgastemperatur 15a vor Abgaspartikelfilter 3
- Sauerstoffkonzentration 15b im Abgas
- Druckabfall 14 über den Abgaspartikelfilter 3
- Periodisches Zeitsignal 18

Der Steuereinheit 1 sind fest programmierte Grössen
vorgegeben:
- Ein zweidimensionales Drosselklappenwinkelkennfeld,
  das in Abhängigkeit der Motordrehzahl 16 und *des* Motordrehmoment**s** 16a den kleinstmöglichen Schliesswinkel der
  Drosselklappe definiert
- Der Sollwert für die Ladelufttemperatur 17a im Regelfall
- Ein Drosselklappenwinkel-Pulsationsgesetz
- Eine Beschleunigungs-Grenzvorgabe
- Der Operationsbereich im Kennfeld (untere/obere Motordrehzahl 16 und unterer/oberer Motordrehmoment 16a),
  in dem die Steuerung resp. Regelung eingreifen soll,
  wobei ausserhalb dieses Operationsbereichs die Drosselklappe 4 automatisch in neutraler Position ist.

Die Steuereinheit 1 nützt die Eingangssignale, um Vergleiche mit den Vorgabewerten durchzuführen und leitet
daraus logische Entscheide ab, die zu einem Befehl 19
an das Stellglied der Drosselklappe 4 führen.
Der Funktionsablauf des Verfahrens wird in einer ersten
Beschreibung ohne Ladeluftkühlung 6 und ohne Abgasrückführung 13 betrachtet.

Die Funktion des Startventilautomaten 8 beeinflusst
das Verfahren im untersten Kennfeldbereich des Motors 1,
dann nämlich, wenn der Ladedruck 17 unter die Ansprechschwelle des Startventils 8 fällt. Es wird dann Frischluft
27 aus der Niederdruckansaugung 111 der Ladeluft 222
zugemischt oder ausschliesslich Frischluft 27 geliefert.
Dieser Mischbereich wird nicht gesondert diskutiert.
Durch Eingriff der Regelung 20 ist es jedoch möglich,
diese Beeinflussung zu unterbinden. Der Einbezug des
Waste-Gate 7 in die Regelung 21 erlaubt mehr logische
Flexibilität in Funktion zur Motordrehzahl 16, zum Mitteldruck
und Ladedruck 17.

Durch gleichzeitige logische Ansteuerung des Startventils
8 und Waste-Gate 7 kann der Druckwellenlader 5 auf Luft-
und Gasseite gleichzeitig umgangen werden, so dass ein
Notbetrieb des Motors 2 bei einem eventuellen Ausfall
des Laders 5 möglich ist.

Gelangt der Motor 2 im Verlauf seines Betriebes in den
Operations-Bereich über die Lastgrenze oder über die
Drehzahlgrenze, sei es von oben oder unten, so veranlasst
die Steuereinheit 1 durch Zugriff auf das gespeicherte
Klappenwinkelkennfeld sofort ein Schliessen (19) der
Drosselklappe 4 auf den entsprechenden interpolierten
Wert.
Dieser Vorgang ist eine reine Steuerung und erfolgt
so schnell, wie die Information verarbeitet werden und
der nicht dargestellte Stellmotor die Drosselklappe 4
bewegen kann, typisch innerhalb 0,1-1 sec. Die drosselnde Klappe 4 in der Druckwellenlader-Ansaugleitung
111 schränkt die Spülung ein, im Druckwellenlader 5
nimmt die Rezirkulation (aus 333 in 222) zu und der
Ladedruck ab. Dies bewirkt, dass sich die Temperatur
der dem Motor 2 zugeführten Ladeluft 222 inkl. Inertgas-
Zumischung aus der primären Rezirkulation 25 erhöht.

0152870

Die Anpassung des Druckwellenladers 5 auf die neue Situation erfolgt mit einer Zeitverzögerung von 2 bis 3 msec.
Wenn nun die heisse Ladeluft 222 ca. nach weiteren 0,1 sec
in den Motor 2 gelangt, läuft der Motorprozess somit
bei hoher Anfangstemperatur, vermindertem Luftüberschuss
und erhöhtem Inertgasanteil ab. Dies hat zur Folge,
dass die Temperatur der Abgase 333 steigt, wobei extreme
Temperaturspitzen in der Flammenfront wegen des erhöhten
Inertgasanteils abgebaut werden, womit $NO_X$ reduziert
wird.

Wenn die Ladelufttemperatur um etwa 80 °C zunimmt, so
steigt die Abgastemperatur vor Abgaspartikelfilter 3
um etwa 150 °C. Der Abgaspartikelfilter 3 wird entsprechend aufgewärmt mit einer Zunahme der Regenerationsfähigkeit.

Nach Ablauf einer gewissen Zeit, entsprechend der Zeitkonstante des Regelkreises inkl. derjenigen des Abgaspartikelfilters 3 - typisch etwa 10 sec -, wird auch
die Abgastemperatur vor dem Druckwellenlader 5 entsprechend ansteigen. Damit steigt wiederum der Ladedruck,
während die Ladelufttemperatur nun Werte erreicht, die
über dem beabsichtigten Niveau liegen.

Hier setzt nun die Regelung ein. Sobald der vorgewählte
Ladelufttemperatur-Sollwert überschritten wird, erteilt
die Steuereinheit ein Signal 19 an den Drosselklappenstellkreis, um die Klappe von der vorgewählten Position
in Richtung "Oeffnen" zu steuern. Die Eigenschaften
des Reglers, d.h. sein P- und I-Grad, können entsprechend
vorgegeben werden, wobei sogar selbstadaptierende Prozesse
in der "Rechner-Regelung" der Steuereinheit 1 möglich
sind. Steuern alleine wäre nicht möglich, da sonst die
Grenzen überschritten würden und keinerlei Ausgleich
von Störgrössen (erhöhte Ansaugtemperatur, Filterverschmutzung etc.) stattfinden könnte. Regelung allein
ist aber auch nicht möglich, da die grosse Zeitkonstante

0152870

des Regelkreises die Regelung zwangsläufig instabil macht, d.h. die Drosselklappe 4 würde anfangs viel zu stark schliessen. Das System geht somit von einer Grundstufe (kennfeldgesteuerte Drosselklappenstellung) aus, die so gewählt ist, dass die Temperatur rasch steigt; in einer zweiten Stufe setzt dann, bei Erreichen des Sollwerts des Prozesses, die Regelung ein, welche den Prozess abfängt und schnell den geforderten Wert einstellt. Bewegt sich der Motor 2 nun innerhalb des Operations-Bereiches, so passt sich die Klappenposition der örtlichen gegebenen Forderung jeweils an. Verlässt der Motor 2 den Operations-Bereich, so muss die Drosselklappe 4 möglichst schnell (in ca. 0,1 sec) in neutrale Position gebracht werden. Die Steuereinheit 1 erteilt dieses Signal 19, die Drosselklappe 4 fährt im Schnellgang auf die neutrale Position.

Wenn der Fahrer das Gaspedal rasch durchtritt - typisch ist etwa 0,1 sec - so wird vom Motor sofort die volle drehzahlabhängige Brennstoffmenge freigegeben; der Druckwellenlader 5 muss also möglichst rasch seine für diesen Punkt max. Luftmenge zur Verfügung stellen. Ist das nicht der Fall, so entsteht Luftmangel, die Verbrennung läuft langsamer und schliesslich gestört ab.

Der Uebergang vom gedrosselten in den ungedrosselten Zustand muss also schnell erfolgen.

Die Steuereinheit 1 bildet zu diesem Zweck ein Signal aus der zeitlichen Aenderung des Regelweges. Für diese Grösse ist eine Grenze vorgegeben. Beim Ueberschreiten der Grenze, d.h. bei schneller Aenderung des Regelweges, wird sofort auf Schnellgang geschaltet und die Drosselklappe 4 geht schlagartig in neutrale Position. Dass der Ladedruck dann auch sofort ansteht und die primäre Rezirkulation 25 aussetzt, hängt mit der natürlichen Eigenschaft des Druckwellenladers 5 zusammen, der dieser Aenderung der Randbedingung in der Niederdruckzuströmleitung 111 innerhalb weniger msec folgt.

Wird der Abgaspartikelfilter 3 bei Luftmangel und hohen Leistungen belegt, so findet keine Regeneration statt. Der Abgaspartikelfilter 3 wird, da der Fahrer den Leistungsverlust durch mehr Gasgeben auszugleichen versucht, ständig heisser und voller. Nimmt der Fahrer jetzt den Fuss vom Gas weg, so ist plötzlich genügend Luft vorhanden, die Regeneration - deren Geschwindigkeit von der Belegung des Abgaspartikelfilters 3, dem Sauerstoffgehalt und der Temperatur abhängt - setzt rapid ein, der Abgaspartikelfilter 3 beginnt leer zu brennen. Der Druckverlust baut sich ab und die Temperaturen innerhalb des Abgaspartikelfilters 3 können aber so stark steigen, dass Zerstörungsgefahr desselben besteht. Die Steuereinheit 1 kann diese Situation erkennen, indem sie die durch Druckverluständerung erkennbare Regenerationsgeschwindigkeit mit einem Grenzwert vergleicht und daraus die Drosselklappe 4 sofort auf eine Notposition schliesst, bei welcher noch weniger Luft als im ursprünglich gespeicherten Kennfeld freigegeben wird, dergestalt, dass der Sauerstoffgehalt, für den die Steuereinheit 15b erhält, dadurch unter 2 % vermindert wird: der Brand erlischt. Es kann von Vorteil sein, den Abgaspartikelfilter 3 an der Sauerstoffgrenze aufzuheizen und ihn dann mit einem hohen Sauerstoffanteil zu beaufschlagen. Dies ist insbesondere für mit Katalytmaterial beschichtete Abgaspartikelfilter 3 vorteilhaft. Die Steuereinheit 1 ist in der Lage, eine pulsierende Bewegung der jeweiligen Position der Drosselklappe 4 nach Massgabe des periodischen Zeitsignals 18 zu überlagern, wobei sowohl die Amplitude der Pulsation, die Verweilzeiten in offener und geschlossener Position sowie das Modulationsintervall dem Speicher der Steuereinheit 1 vorgegeben sind. Im Schubbetrieb - Abwärtsfahren, Fuss vom Gas, Einspritzmenge = 0 - wird die im Prozess vorhandene und im Material gespeicherte Wärme durch ständiges Ansaugen von Frischluft 27 allmählich in den Auspuff 444 abgeführt. Der Abgaspartikelfilter 3 wird also ausgekühlt und beim
neuen Gasgeben ist zunächst eine Ansprechverzögerung
zu erwarten.

Um diesen Effekt zu beheben oder zumindest in seiner
negativen Wirkung zu reduzieren, wird die Steuereinheit
1 durch Interpretation der Brennstoffmenge feststellen,
wann Schubbetrieb eintritt. Sie bringt dann die Drosselklappe 4 sofort in eine maximal geschlossene Position,
die unabhängig von den anderen Drosselklappenwinkeln
gespeichert wird.

Dabei sollte hier der Startventilbypass 27 nach der
Drosselklappe 4 angeordnet sein, damit im Schubbetrieb
keine kühle Frischluft angesaugt werden kann.

Die Spülung des Druckwellenladers 5 wird nun extrem
reduziert, sie kann auf 0 abgebaut werden; dies ist
der Fall, wenn die Drosselklappe 4 ganz geschlossen
ist. Wenn in den Druckwellenlader 5 keine Luft mehr
eintritt, so kann auch kein Gas 444 den Druckwellenlader
verlassen, d.h. der Motor 2 rezirkuliert 100 %. Das
im Kreis umlaufende Gas wird über die Leitung ins Freie
Wärme verlieren, andererseits wird aber durch die Kompressionsarbeit des Motors 2 ständig etwas Wärme zugeführt. In Summe wird man mindestens erreichen, dass
der Abgaspartikelfilter 3 langsamer abkühlt als ohne
diese Massnahme.

Die bis anhin beschriebene Schaltung kann mit einer
sekundären Abgasrückführung 13 kombiniert werden. Dieses
Gas ist "maximal heiss", also wird höchste Temperatursteigerung durch Zumischung zur Ladeluft 222 erzielt.

Der Druckwellenlader 5 wird nun nicht gedrosselt, d.h.
sein Ladedruck sowie Sauerstoffgehalt bleiben hoch.

Da der Luftüberschuss nun höher ist als im Vergleichsfall,
wird die Abgastemperatur etwas tiefer sein. Höhere Rezirkulationsrate und heisseres Rezirkulationsabgas können
den Effekt zum Teil kompensieren. Vor allem könnte für
den jeweiligen Abgaspartikelfilter 3 der höhere Sauerstoffgehalt bei dieser Verfahrenskombination von Vorteil sein. Selbstverständlich gilt das Gesagte auch für Oxydations-Katalysatoren.

Da die Erhöhung der Ladelufttemperatur durch Abgasrückführung 13 den Druckwellenlader 5 nicht tangiert, kann das kombinierte Verfahren durch Steigerung der Temperatur auf z.B. 250 °C Verbesserungen bringen. Die Steuerung 23 des Abgasrückführungsventils 10 muss selbstverständlich mit der Schaltung der Drosselklappe 4 synchronisiert werden.

Die Schaltung kann des weiteren mit einer Ladeluftkühlung 6 mit Bypassleitung 12 ergänzt werden. Der Einsatz der Drosselklappe 4 hat ja zum Ziel, die Ladelufttemperatur im Teillastgebiet zu erhöhen. Ein Ladeluftkühler nimmt die Wärme wieder aus der Ladeluft heraus, neutralisiert also das Resultat. Die Zielsetzung der Ladeluftkühlung 6 konzentriert sich allerdings auf den Vollastbereich, da dort durch Steigerung der Dichte der Luftüberschuss gesteigert werden soll, was eine Verbesserung der Leistung und des Brennstoffverbrauchs des Motors 1 mit sich bringt. Im Teillastbereich ist eine Ladeluftkühlung 6 nicht erforderlich. Es ist im Gegenteil sogar häufig der Fall, dass eine Erhöhung der Temperatur bei Teillast sowohl den Brennstoffverbrauch (Heisskühlung) als auch den Geräuschpegel eines Dieselmotors verbessert.

Das Problem wird dadurch gelöst, dass die Ladeluftkühlung 6 durch die Bypassleitung 12 umgangen wird, wobei die Regelung 24 des Ventils 9 synchron mit der Schaltung der Drosselklappe 4 geschaltet werden muss: Im Operations-Bereich umgeht die Ladeluft 222 also die Ladeluftkühlung 6. Beim Ueberschreiten der oberen Grenze des Operationsbereichs wird der Bypass 12 geschlossen und die Ladeluft gekühlt.

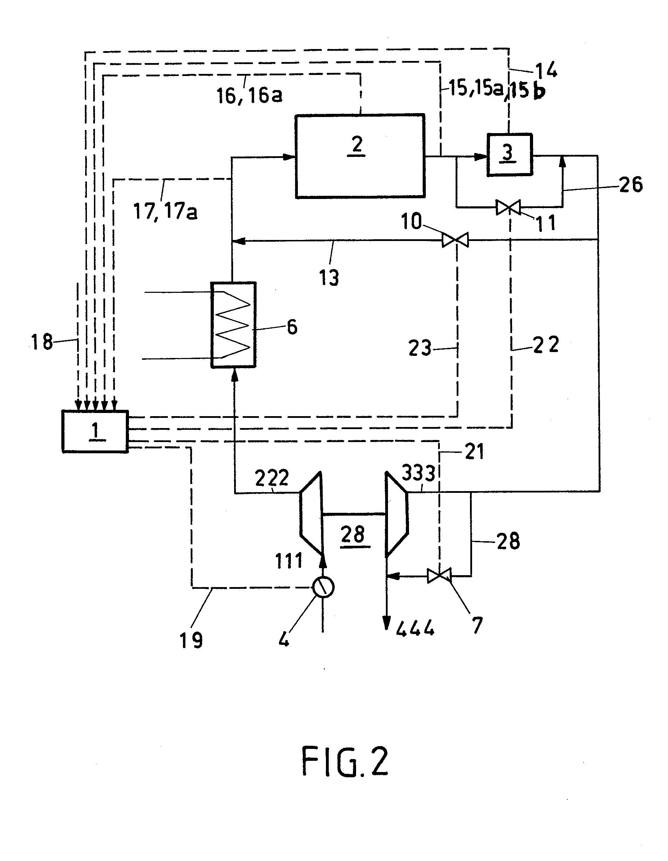

Als besonders geeignet bietet sich für die Ladeluftkühlung 6 der Einsatz von Motorkühlwasser an. Dabei könnte

0152870

sogar auf den Bypass 12 verzichtet werden, wenn im kombinierten System mit Abgasrückführung 13 gearbeitet wird:
Die Ladeluft kommt ohne primäre Rezirkulation 25 relativ
kalt in die Ladeluftkühlung 6. Sie wird dort auf etwa
100 °C und anschliessend durch Gas-Zumischung aus der
Abgasrückführung 13 weiter aufgeheizt. Der erforderliche
Sauerstoffgehalt kann vom Druckwellenlader 5 geliefert
werden. Durch Drosselung durch Drosselklappe 4 in Kombination mit den genannten Massnahmen wird der Luftüberschuss auf das notwendige Mass abgebaut.
Bei Ausfall der Speisespannung zur Steuereinheit 1 wird
die Drosselklappe 4 automatisch auf neutrale Position
gebracht (Federvorspannung), und der aufgeladene Motor 1
kann ohne Schaden bei guter Fahrleistung und unverändertem Brennstoffverbrauch weiter betrieben werden. Für
die Beschleunigungsphasen oder Notfälle kann der Abgaspartikelfilter 3 durch den Bypass 26 umgangen werden.
Hierzu wird das Bypassventil 11 von der Steuereinheit 1
durch Regelung 22 betätigt.
Selbstverständlich kann anstelle des Druckwellenladers 5
ein Turbolader 28 (siehe Fig. 2) eingesetzt werden.
Die zu behebenden Nachteile einer solchen Schaltung
sind:
- Auswirkung der Drosselmassnahme auf die Hochdruck-.
  differenz
- Kein spontaner Uebergang vom gedrosselten auf den
  ungedrosselten Zustand
- Keine Kombinationsmöglichkeit von Drosselung und Vorheizung
- Die Aufgabenstellung kann nur dadurch gelöst werden,
  dass zusätzlich zur Drosselklappe 4 das Abgasrückführventil 10 verwendet werden muss.

Gegenüber der Schaltung aus Fig. 1 weist das Beispiel
aus Fig. 2, hinsichtlich Funktion der dargestellten
Elemente  sonst keine Unterschiede auf.

17/84
0152870

<u>P a t e n t a n s p r u c h</u>

Verfahren zum Regenerieren des Abgaspartikelfilters
bei Verbrennungsmotoren, wobei die Schaltung des Motors
aus an sich bekannten Elementen besteht, im wesentlichen
aus einem Aufladeaggregat (5) mit vorgeschalteter Drosselklappe (4), einem hochdruckseitig angeordneten Abgaspartikelfilter (3), einem Startventil (8), einem
Waste-Gate (7) mit oder ohne Ladeluftkühlung (6) mit
Bypassleitung (12) und mit oder ohne Abgasrückführung
(13), dadurch gekennzeichnet, dass die Drosselklappe
(4) auf eine Grundstufe gesteuert wird, von wo aus dann
durch die Steuereinheit (1) die synchrone Regelung mit
Hilfe der Elemente (5, 4, 3, 8, 7, 6, 12, 13) einsetzt.

FIG.1

FIG.2